# EUROPÄISCHE PATENTSCHRIFT

(11) **EP 1 436 924 B1**
(45) Veröffentlichungstag und Bekanntmachung des Hinweises auf die Patenterteilung: **10.05.2006**
(21) Anmeldenummer: 02776780.5
(22) Anmeldetag: 04.10.2002
(51) Int. Cl.: H04J 3/06, H04L 12/64

(54) **VERFAHREN ZUM BETRIEB EINES ENDTEILNEHMERS EINES ISOCHRONEN, ZYKLISCHEN KOMMUNIKATIONSSYSTEMS**
METHOD FOR OPERATING AN END-USER OF AN ISOCHRONOUS CYCLICAL COMMUNICATION SYSTEM
PROCEDE PERMETTANT A UN ABONNE TERMINAL DE SE SERVIR D'UN SYSTEME DE COMMUNICATION CYCLIQUE ISOCHRONE

(30) Priorität: 17.10.2001 DE 10150671; 05.09.2002 DE 10241191
(43) Veröffentlichungstag der Anmeldung: 14.07.2004
(73) Patentinhaber: SIEMENS AKTIENGESELLSCHAFT, 80333 München (DE)
(72) Erfinder: KLOTZ, Dieter, 90768 Fürth (DE); BRÜCKNER, Dieter, 96199 Zapfendorf (DE); KRAUSE, Karl-Heinz, 90475 Nürnberg (DE)
(86) Internationale Anmeldenummer: PCT/DE2002/003752
(87) Internationale Veröffentlichungsnummer: WO 2003/036832

(56) Entgegenhaltungen:
- DE-A- 4 215 380
- DE-A- 10 004 425
- DE-A- 19 710 971
- US-A- 4 502 137
- SHARROCK S M ET AL: "A CSMA/CD-BASED, INTEGRATED VOICE/DATA PROTOCOL WITH DYNAMIC CHANNEL ALLOCATION" COMPUTER NETWORKS AND ISDN SYSTEMS, NORTH HOLLAND PUBLISHING. AMSTERDAM, NL, Bd. 18, Nr. 1, 24. November 1989 (1989-11-24), Seiten 1-18, XP000070488 ISSN: 0169-7552
- KOOPMAN P J ET AL: "TIME DIVISION MULTIPLE ACCESS WITHOUT A BUS MASTER" UTRC TECHNICAL REPORT RR-9500470, [Online] 30. Juni 1995 (1995-06-30), Seiten 1-12, XP002238363 Gefunden im Internet: <URL:http://www.ece.cmu.edu/ koopman/jtdma/jtdma.html> [gefunden am 2003-04-14]

## Beschreibung

Die Erfindung betrifft ein Verfahren zum Betrieb eines Endteilnehmers eines isochronen Kommunikationssystems sowie einen Endteilnehmer, einen Durchleiteteilnehmer und entsprechende Computerprogrammprodukte.

Unter einem synchronen, getakteten Kommunikationssystem mit Äquidistanz-Eigenschaften versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden.

Ein äquidistanter deterministischer zyklischer Datenaustausch in Kommunikationssystemen basiert auf einer gemeinsamen Takt- bzw. Zeitbasis aller an der Kommunikation beteiligten Komponenten. Die Takt- bzw. Zeitbasis wird von einer ausgezeichneten Komponente (Taktschläger) zu den anderen Komponenten übertragen. Bei isochronem Realtime-Ethernet wird der Takt bzw. die Zeitbasis von einem Synchronisationsmaster durch das Senden von Synchronisationstelegrammen vorgegeben.

Teilnehmer sind beispielsweise zentrale Automatisierungsgeräte, Programmier-, Projektierungs- oder Bediengeräte, Peripheriegeräte wie z. B. Ein-/Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Teilnehmer werden auch Netzwerkknoten oder Knoten genannt. Unter Kontrolleinheiten werden im folgenden Regler- oder Steuerungseinheiten jeglicher Art verstanden, aber auch beispielsweise Switches und/oder Switch-Controller. Als Datennetze werden beispielsweise Bussysteme wie z. B. Feldbus, Profibus, Ethernet, Industrial Ethernet, FireWire oder auch PC-interne Bussysteme (PCI), etc., insbesondere aber auch isochrones Real-time Ethernet, verwendet.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d. h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei hier synonym zur oben erwähnten Übertragung von Datentelegrammen oder Datenpaketen verwendet.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt, im Gegensatz zur nicht echtzeitkritischen, beispielsweise inter- bzw. intranetbasierten Datenkommunikation. Gemäß IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Automatisierungskomponenten (z. B. Steuerungen, Antriebe, ...) verfügen heute im Allgemeinen über eine Schnittstelle zu einem zyklisch getakteten Kommunikationssystem. Eine Ablaufebene der Automatisierungskomponente (Fast-cycle) (z. B. Lageregelung in einer Steuerung, Drehmomentregelung eines Antriebs) ist auf den Kommunikationszyklus synchronisiert. Dadurch wird der Kommunikationstakt festgelegt. Andere, niederperformante Algorithmen (Slow-cycle) (z. B. Temperaturregelungen) der Automatisierungskomponente können ebenfalls nur über diesen Kommunikationstakt mit anderen Komponenten (z. B. Binärschalter für Lüfter, Pumpen, ...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Für die Prozesssteuerung und -überwachung in der automatisierten Fertigung und insbesondere bei digitalen Antriebstechniken sind sehr schnelle und zuverlässige Kommunikationssysteme mit vorhersagbaren Reaktionszeiten erforderlich.

In der deutschen Patentanmeldung DE 100 58 524.8 ist ein System und ein Verfahren zur Übertragung von Daten über schaltbare Datennetze, insbesondere das Ethernet, offenbart, das einen Mischbetrieb von echtzeitkritischer und nichtechtzeitkritischer, insbesondere Inter- bzw. Intranet basierter Datenkommunikation erlaubt.

Dies ermöglicht sowohl eine echtzeitkritische (RT; Real-Time) als auch eine nicht echtzeitkritische Kommunikation (NRT; Non-Real-Time) in einem schaltbaren Datennetz, bestehend aus Teilnehmern und Koppeleinheiten, beispielsweise eines verteilten Automatisierungssystems, durch einen zyklischen Betrieb.

In einem so genannten Übertragungszyklus existiert für alle Teilnehmer und Koppeleinheiten des schaltbaren Datennetzes jeweils wenigstens ein Bereich zur Übermittlung echtzeitkritischer und wenigstens ein Bereich zur Übermittlung nicht echtzeitkritischer Daten, wodurch die echtzeitkritische von der nicht echtzeitkritischen Kommunikation getrennt wird. Da alle Teilnehmer und Koppeleinheiten immer auf eine gemeinsame Zeitbasis synchronisiert sind, finden die jeweiligen Bereiche zur Übermittlung von Daten für alle Teilnehmer und Koppeleinheiten jeweils zum selben Zeitpunkt statt, d. h. die echtzeitkritische Kommunikation findet zeitlich unabhängig von der nicht echtzeitkritischen Kommunikation statt und wird deshalb nicht von dieser beeinflusst.

Die echtzeitkritische Kommunikation wird im Voraus geplant. Einspeisen der Datentelegramme beim originären Sender sowie deren Weiterleitung mittels der beteiligten Koppeleinheiten erfolgt zeitbasiert. Durch Zwischenspeicherung in den jeweiligen Koppeleinheiten wird erreicht, dass zu beliebiger Zeit auftretende, spontane, internetfähige, nicht echtzeitkritische Kommunikation in den für die nicht echtzeitkritische Kommunikation vorgesehenen Übertragungsbereich eines Übertragungszyklus verschoben und auch nur dort übertragen wird.

In dieser Anmeldung ist die Ausprägung eines prinzipiellen Aufbaus eines Übertragungszyklus, der in zwei Bereiche aufgeteilt ist, beispielhaft dargestellt. Ein Übertragungszyklus ist in einen ersten Bereich, der zur Übertragung echtzeitkritischer Daten vorgesehen ist, und einen zweiten Bereich, der zur Übertragung nicht echtzeitkritischer Daten vorgesehen ist, aufgeteilt. Die Länge des dargestellten Übertragungszyklus symbolisiert dessen zeitliche Dauer, die vorteilhafterweise je nach Anwendungszweck beispielsweise zwischen einigen Mikrosekunden und einigen Sekunden liegt.

Die Zeitdauer eines Übertragungszyklus ist veränderbar, wird aber vor dem Zeitpunkt der Datenübertragung, beispielsweise durch einen Steuerungsrechner, wenigstens einmal festgelegt und ist für alle Teilnehmer und Koppeleinheiten des schaltbaren Datennetzes jeweils gleich lang. Die Zeitdauer eines Übertragungszyklus und/oder die Zeitdauer des ersten Bereichs, der zur Übertragung von echtzeitkritischen Daten vorgesehen ist, kann jederzeit, beispielsweise zu vorher geplanten, festen Zeitpunkten und/oder nach einer geplanten Anzahl von Übertragungszyklen, vorteilhafterweise vor Beginn eines Übertragungszyklus verändert werden, indem der Steuerungsrechner beispielsweise auf andere geplante, echtzeitkritische Übertragungszyklen umschaltet.

Darüber hinaus kann der Steuerungsrechner jederzeit im laufenden Betrieb eines Automatisierungssystems je nach Erfordernis Neuplanungen der Echtzeitkommunikation durchführen, wodurch die Zeitdauer des RT-Teilzyklus verändert werden kann. Die absolute Zeitdauer eines Übertragungszyklus bleibt im laufenden Betrieb konstant und ist ein Maß für den zeitlichen Anteil, bzw. die Bandbreite der nicht echtzeitkritischen Kommunikation während eines Übertragungszyklus, also die Zeit, die für die nicht echtzeitkritische Kommunikation zur Verfügung steht.

So hat die nicht echtzeitkritische Kommunikation beispielsweise bei einer Zeitdauer der echtzeitkritischen Kommunikation von 350 µs und einem Übertragungszyklus von 500 µs eine Bandbreite von 30 %, bei 10 ms eine Bandbreite von 97 %. Im ersten Bereich, der zur Übertragung echtzeitkritischer Daten vorgesehen ist, ist vor dem Senden der eigentlichen echtzeitkritischen Datentelegramme eine gewisse Zeitdauer zum Senden von Datentelegrammen zur Organisation der Datenübertragung reserviert.

Die Datentelegramme zur Organisation der Datenübertragung enthalten beispielsweise Daten zur Zeitsynchronisation der Teilnehmer und Koppeleinheiten des Datennetzes und/oder Daten zur Topologieerkennung des Netzwerks. Nachdem diese Datentelegramme gesendet wurden, werden die echtzeitkritischen Datentelegramme gesendet. Da die Echtzeitkommunikation durch den zyklischen Betrieb im Voraus planbar ist, sind für alle zu übertragenden, echtzeitkritischen Datentelegramme die Sendezeitpunkte bzw. die Zeitpunkte für die Weiterleitung der echtzeitkritischen Datentelegramme vor Beginn der Datenübertragung bekannt, d. h. die Zeitdauer des Bereichs zur Übertragung von nicht echtzeitkritischen Daten ist automatisch durch die Zeitdauer des Bereichs zur Übertragung von echtzeitkritischen Daten festgelegt.

Vorteil dieser Anordnung ist, dass jeweils nur die notwendige Übertragungszeit für den echtzeitkritischen Datenverkehr verwendet wird und nach dessen Beendigung die restliche Zeit automatisch für die nicht echtzeitkritische Kommunikation, beispielsweise für die nicht planbare Internetkommunikation bzw. andere nicht echtzeitkritische Anwendungen zur Verfügung steht.

Besonders vorteilhaft ist, dass die Zeitdauer des Bereichs zur Übertragung von echtzeitkritischen Daten jeweils durch die verbindungsspezifisch zu übertragenden Daten bestimmt wird, d. h., die Zeitdauer der beiden Bereiche wird für jede einzelne Datenverbindung durch die jeweils notwendige Datenmenge der zu übertragenden echtzeitkritischen Daten bestimmt, wodurch die zeitliche Aufteilung der beiden Bereiche für jede einzelne Datenverbindung für jeden Übertragungszyklus verschieden sein kann.

Es wird jeweils nur die notwendige Übertragungszeit für den echtzeitkritischen Datenverkehr verwendet und die restliche Zeit eines Übertragungszyklus steht automatisch für die nicht echtzeitkritische Kommunikation, beispielsweise für die nicht planbare Internetkommunikation bzw. andere nicht echtzeitkritische Anwendungen für alle Teilnehmer des schaltbaren Datennetzes zur Verfügung.

Da die Echtzeitkommunikation im Voraus entsprechend so geplant ist, dass die betrachteten, echtzeitkritischen Datentelegramme spätestens zum Weiterleitungszeitpunkt oder früher bei bzw. in den entsprechenden Koppeleinheiten ankommen, können die echtzeitkritischen Datentelegramme ohne zeitlichen Zwischenraum gesendet bzw. weitergeleitet werden, so dass durch das dicht gepackte Senden, bzw. Weiterleiten, die zur Verfügung stehende Zeitdauer bestmöglich genutzt wird. Selbstverständlich ist es aber auch möglich bei Bedarf Sendepausen zwischen der Übertragung der einzelnen Datentelegramme einzubauen.

Die prinzipielle Arbeitsweise in einem geschalteten Netzwerk wird stellvertretend für ein beliebiges Netzwerk beispielhaft anhand von zwei Teilnehmern, beispielsweise einem Antrieb und einem Steuerrechner, mit jeweils integrierten Koppeleinheiten und einem weiteren Teilnehmer ohne Koppeleinheit, die durch Datenverbindungen miteinander verbunden sind, folgendermaßen erläutert. Die Koppeleinheiten besitzen jeweils lokale Speicher, die über interne Schnittstellen mit den Teilnehmern verbunden sind.

Über die Schnittstellen tauschen die Teilnehmer Daten mit den entsprechenden Koppeleinheiten aus. Die lokalen Speicher sind innerhalb der Koppeleinheiten über die Datenverbindungen mit den Steuerwerken verbunden. Die Steuerwerke empfangen Daten bzw. leiten Daten weiter über die internen Datenverbindungen von bzw. zu den lokalen Speichern oder über eine oder mehrere der externen Ports. Durch Anwendung des Verfahrens der Zeitsynchronisation haben die Koppeleinheiten stets eine gemeinsame synchrone Zeitbasis. Hat ein Teilnehmer echtzeitkritische Daten, so werden diese zum vorausgeplanten Zeitpunkt während des Bereichs für die echtzeitkritische Kommunikation über die entsprechende Schnittstelle und den lokalen Speicher vom entsprechenden Steuerwerk abgeholt und von dort über den vorgesehenen externen Port zur nächsten verbundenen Koppeleinheit gesendet.

Sendet ein anderer Teilnehmer zur gleichen Zeit, also während der echtzeitkritischen Kommunikation, nicht echtzeitkritische Daten, beispielsweise für eine Internetabfrage, so werden diese vom Steuerwerk über den externen Port empfangen und über eine interne Verbindung an den lokalen Speicher weitergeleitet und dort zwischengespeichert. Von dort werden sie erst im Bereich für die nicht echtzeitkritische Kommunikation wieder abgeholt und an den Empfänger weitergeleitet, d. h. sie werden in den zweiten Bereich des Übertragungszyklus, der für die spontane, nicht echtzeitkritische Kommunikation vorbehalten ist, verschoben, wodurch Störungen der Echtzeitkommunikation ausgeschlossen werden.

Für den Fall, dass nicht alle zwischengespeicherten, nicht echtzeitkritischen Daten während des, für die Übertragung der nicht echtzeitkritischen Daten vorgesehenen Bereichs eines Übertragungszyklus übertragen werden können, werden sie im lokalen Speicher der entsprechenden Koppeleinheit solange zwischengespeichert, bis sie während eines, für die Übertragung der nicht echtzeitkritischen Daten vorgesehenen Bereichs eines späteren Übertragungszyklus übertragen werden können, wodurch Störungen der Echtzeitkommunikation in jedem Fall ausgeschlossen werden.

Die echtzeitkritischen Datentelegramme, die über entsprechende Datenverbindungen über die externen Ports beim Steuerwerk der zugehörigen Koppeleinheit eintreffen, werden unmittelbar über die entsprechenden externen Ports weitergeleitet. Dies ist möglich, da die Echtzeitkommunikation im Voraus geplant ist und deshalb für alle zu übertragenden, echtzeitkritischen Datentelegramme Sende- und Empfangszeitpunkt, alle jeweils beteiligten Koppeleinheiten sowie alle Zeitpunkte für die Weiterleitung und alle Empfänger der echtzeitkritischen Datentelegramme bekannt sind.

Durch die im Voraus erfolgte Planung der Echtzeitkommunikation ist auch sichergestellt, dass es auf den Datenverbindungen zu keinen Datenkollisionen kommt. Die Weiterleitungszeitpunkte aller echtzeitkritischen Datenpakete von den jeweils beteiligten Koppeleinheiten sind ebenfalls vorher geplant und damit eindeutig festgelegt. Das Ankommen der echtzeitkritischen Datentelegramme ist deshalb so geplant, dass die betrachteten, echtzeitkritischen Datentelegramme spätestens zum Weiterleitungszeitpunkt oder früher im Steuerwerk der entsprechenden Koppeleinheit ankommen. Damit ist das Problem von Zeitunschärfen, die sich insbesondere bei langen Übertragungsketten bemerkbar machen, eliminiert.

Mit dem in der deutschen Patentanmeldung DE 100 58 524.8 beschriebenen Verfahren ist es möglich, Ethernet-basierte Kommunikationsnetze, insbesondere isochrone Ethernet-basierte Kommunikationsnetze, aufzubauen,
- deren Knoten im Submikrosekundenbereich synchron arbeiten und
- die zyklische Kommunikation exakt zu den geplanten Zeitpunkten ausführen (isochrone Echtzeitkommunikation), unabhängig von beliebiger sonstiger, spontaner Kommunikation (NRT-Kommunikation oder Non-Realtime-Kommunikation) auf bzw. in diesem Netz.

Alle Teilnehmer an der isochronen Echtzeitkommunikation müssen aber auf spezieller Kommunikations-Hardware basieren, um
- die Zeitsynchronität zu erzielen und
- Telegramme exakt zum geplanten Zeitpunkt abzusenden.

Eine Einbindung von Teilnehmern mit existierender Ethernet-Anschaltung, die diese speziellen Hardwarevorkehrungen nicht haben, in die isochrone Echtzeitkommunikation, im Folgenden IRT-Kommunikation genannt, ist im Stand der Technik nicht möglich.

DE4215380 ( Siemens ) offenbart ein Verfahren entsprechend den Oberbegriffen der unabhängigen Ansprüche. Insbesondere offenbart diese Schrift ein Automatisierungssystem mit Übertragung von Zeitinformationen unter Berücksichtigung vorhersehbarer, konstanter Verzögerungen, der Signallaufzeit sowie der Verarbeitungszeit im Teilnehmer.

Der Erfindung liegt daher die Aufgabe zugrunde, ein verbessertes Verfahren zum Betrieb eines Endteilnehmers eines isochronen, zyklischen Kommunikationssystems zu schaffen, wel-ches die Anschaltung eines Endteilnehmers an ein solches Kommunikationssystem ermöglicht, der eine solche spezielle Hardwareunterstützung nicht hat. Ferner liegt der Erfindung die Aufgabe zugrunde, einen entsprechenden Endteilnehmer, Durchleiteteilnehmer und Computerprogrammprodukte zu schaffen.

Die der Erfindung zugrunde liegenden Aufgaben werden jeweils mit den Merkmalen der unabhängigen Patentansprüche gelöst. Bevorzugte Ausführungsformen der Erfindung ergeben sich aus den abhängigen Patentansprüchen.

Ausgangspunkt der vorliegenden Erfindung ist die Erkenntnis, dass die Latenzzeit zwischen dem Eintreffen eines Datentelegramms an einen Teilnehmer, z. B. einem Ethernet-Teilnehmer, bis zum Auslösen eines entsprechenden Interrupts konstant und ermittelbar ist, wenn der Empfangspuffer leer ist, d. h. wenn in dem Empfangspfad des Endteilnehmers keine Telegramme gespeichert sind. Ein solcher leerer Empfangspfad wird im Weiteren als leere Anschaltung bezeichnet.

Um eine näherungsweise Synchronisation des Endteilnehmers mit der Zeitbasis des isochronen, zyklischen Kommunikationssystems zu erreichen, empfängt der Endteilnehmer von einem unmittelbar benachbarten Durchleiteteilnehmer in verschiedenen Kommunikationszyklen Synchronisationsdatentelegramme. Solche Synchronisationsdatentelegramme werden innerhalb des isochronen, zyklischen Kommunikationssystems zur Synchronisierung der Zeitbasen der einzelnen Teilnehmer des Kommunikationssystems verwendet. Wegen der fehlenden Hardwareunterstützung in dem Endteilnehmer ist eine genaue Synchronisation, wie diese bei den Teilnehmern des isochronen Kommunikationssystems erfolgt, nicht möglich. Die Synchronisation der Zeitbasis in dem Endteilnehmer erfolgt vielmehr mit einer Toleranz, die sich aus der Gesamt-Übertragungszeit zwischen dem Durchleiteteilnehmer und dem Endteilnehmer ergibt.

Nach einer bevorzugten Ausführungsform der Erfindung verfügt der Endteilnehmer über einen Empfangspuffer. Wenn der Empfangspuffer maximal gefüllt ist, benötigt der Endteilnehmer zur Leerung des Empfangspuffers eine maximale Entleerzeit. Bei Vorhandensein eines Empfangspuffers in dem Endteilnehmer ist die Gesamt-Übertragungszeit eines Synchronisationsdatentelegramms also nur dann determiniert, wenn der Empfangspuffer des Endteilnehmers beim Empfang des Synchronisationsdatentelegramms leer ist.

Deshalb erfolgt die Sendung eines solchen Synchronisationsdatentelegramms in dieser Ausführungsform durch den Durchleiteteilnehmer frühestens erst nach einer Sendepause nach Beginn des Kommunikationszyklus, wobei die Sendepause der maximalen Entleerzeit entspricht. Aufgrund dessen ist sichergestellt, dass ein von dem Durchleiteteilnehmer an den Endteilnehmer abgesendetes Synchronisationsdatentelegramm auf einen leeren Empfangspuffer des Endteilnehmers trifft, und somit die Gesamt-Übertragungszeit unabhängig von der Länge eines zuvor von dem Endteilnehmer empfangenen Datentelegramms ist.

Damit die Einspeisung eines Datentelegramms von dem Endteilnehmer mit der ungenau synchronisierten Zeitbasis in das isochrone, zyklische Kommunikationssystem erfolgen kann, erfolgt erfindungsgemäß die Sendung eines solchen Datentelegramms von dem Endteilnehmer an dessen benachbarten Durchleiteteilnehmer immer frühestens zu Beginn des Kommunikationszyklus und spätestens um die Toleranzzeit der Synchronisation der Zeitbasis des Endteilnehmers vor dem Weiterleitungszeitpunkt des Durchleiteteilnehmers. Aufgrund der Sendung des Datentelegramms zu einem Zeitpunkt, der zumindest um die Toleranzzeit vor dem Weiterleitungszeitpunkt liegt, ist sichergestellt, dass der Durchleiteteilnehmer das Datentelegramm von dem Endteilnehmer spätestens zu einem Zeitpunkt empfängt, der eine Weiterleitung des Datentelegramms gemäß des projektierten Weiterleitungszeitpunkts ermöglicht.

Zusammenfassend handelt es sich bei der offenbarten Erfindung um ein System und Verfahren zur Echtzeitkommunikation in Kommunikationssystemen mit Teilnehmern ohne HW-Unterstützung für Echtzeitfähigkeit und Teilnehmern mit HW-Unterstützung für Echtzeitfähigkeit, wobei
- die Laufzeit, insbesondere die konstante Laufzeit eines Telegramms von einem zweiten Teilnehmer zu einem ersten Teilnehmer zur Zeitsynchronisation des ersten Teilnehmers mit allen anderen Teilnehmern verwendet wird,
- die Laufzeit, insbesondere die konstante Laufzeit eines solchen Telegramms durch eine vorangehende Sendepause garantiert wird,
- durch einen Empfangspuffer beim zweiten Teilnehmer der erste Teilnehmer Echtzeit-Telegramme zeitlich unpräzise senden kann und erst das Weiterleiten aus diesem Empfangspuffer mit hoher Zeitgenauigkeit erfolgen muss,
- der Empfangspuffer beim zweiten Teilnehmer mehrere Telegramme des ersten Teilnehmers puffern kann.

Von besonderem Vorteil ist es darüber hinaus, dass die offenbarten Verfahren in Automatisierungssystemen, insbesondere bei und in Verpackungsmaschinen, Pressen, Kunststoffspritzmaschinen, Textilmaschinen, Druckmaschinen, Werkzeugmaschinen, Roboter, Handlingsystemen, Holzverarbeitungsmaschinen, Glasverarbeitungsmaschinen, Keramikverarbeitungsmaschinen sowie Hebezeugen eingesetzt bzw. verwendet werden können.

Im Weiteren werden bevorzugte Ausführungsbeispiele der Erfindung mit Bezugnahme auf die Zeichnungen näher erläutert. Es zeigen:
- Fig. 1:: eine Ausführungsform eines erfindungsgemäßen Verfahrens zur Synchronisation der Zeitbasis eines Endteilnehmers ohne Hardwareunterstützung,
- Fig. 2:: ein Flussdiagramm zur Versendung von Datentelegrammen von dem Endteilnehmer mit der ungenau synchronisierten Zeitbasis,
- Fig. 3:: eine Ausführungsform eines erfindungsgemäßen Kommunikationssystems,
- Fig. 4:: eine Prinzipdarstellung zur Zeitsynchronisation und Laufzeitbestimmung,
- Fig. 5:: eine Darstellung zur Verdeutlichung der notwendigen Sendepause bei dem Durchleiteteilnehmer,
- Fig. 6:: eine Prinzipdarstellung der Zwischenpufferung im Eingangs-Puffer des Durchleiteteilnehmers,
- Fig. 7:: eine Darstellung zur Veranschaulichung der Sende- und Empfangszeitpunkte.

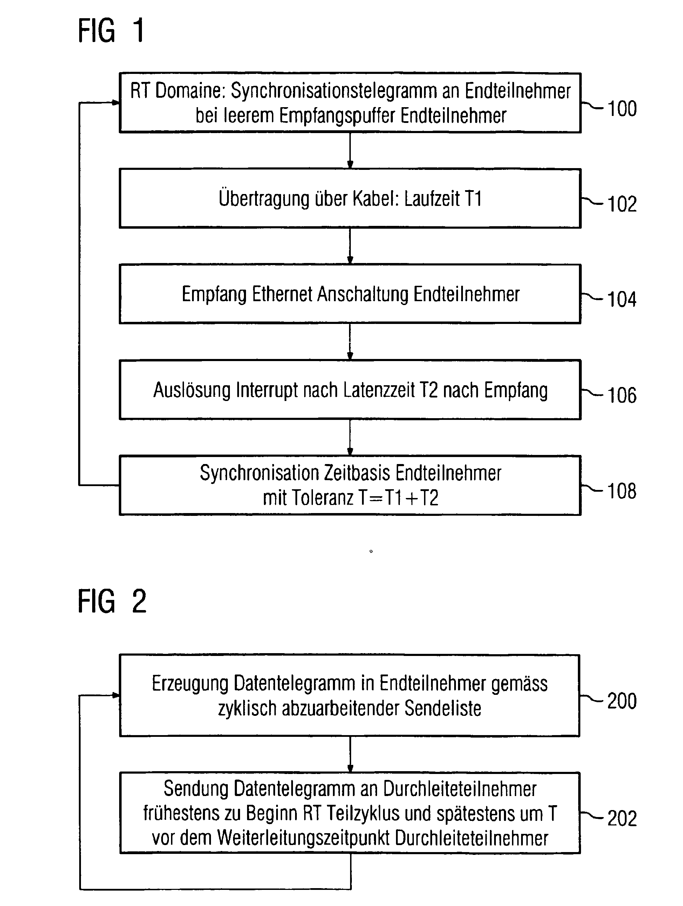

Die Figur 1 zeigt ein Flussdiagramm zur Synchronisation der Zeitbasis eines Endteilnehmers. Von einem Durchleiteteilnehmer, der zu dem Endteilnehmer unmittelbar benachbart ist, und der sich in der Echtzeit-Domain eines isochronen, zyklischen Kommunikationssystems befindet, wird im Schritt 100 ein Synchronisationsdatentelegramm an den Endteilnehmer gesendet, wobei zu dem Sendezeitpunkt oder zumindest bei dem vorher bestimmbaren Empfangszeitpunkt der Empfangspuffer des Endteilnehmers leer ist.

In dem Schritt 102 erfolgt die Übertragung des Synchronisationsdatentelegramms über ein Kabel, welches den Durchleiteteilnehmer und den Endteilnehmer miteinander verbindet. Diese Übertragung ist mit einer Laufzeit T1 behaftet.

In dem Schritt 104 wird das Synchronisationsdatentelegramm in dem Empfangspuffer der leeren Anschaltung des Endteilnehmers empfangen. In dem Schritt 106 wird nach einer determinierten Latenzzeit T2 nach dem Empfang ein Interrupt ausgelöst. Aufgrund des Interrupts wird der Inhalt des Synchronisationsdatentelegramms ausgewertet und die Zeitbasis des Endteilnehmers wird entsprechend nachgeregelt. Diese Synchronisation der Zeitbasis des Endteilnehmers mit der Toleranz T = T1 + T2 erfolgt in dem Schritt 108.

Eine gewisse Zeit später wird der Schritt 100 erneut durchgeführt, d. h. es wird erneut ein Synchronisationsdatentelegramm von dem Durchleiteteilnehmer gesendet. Dies entspricht der Verfahrensweise in der Echtzeit-Domain, da auch eine Nachregelung der Zeitbasen der Teilnehmer von Zeit zu Zeit erforderlich ist.

Die Figur 2 zeigt die Vorgehensweise zur Versendung von Datentelegrammen von dem Endteilnehmer in das isochrone, zyklische Kommunikationssystem hinein. In dem Schritt 200 erfolgt die Erzeugung eines Datentelegramms in dem Endteilnehmer gemäß einer zyklisch abzuarbeitenden Sendeliste. Diese Sendeliste wird im Rahmen der Projektierung des Kommunikationssystems erstellt.

In dem Schritt 202 wird das projektierte Datentelegramm an den unmittelbar benachbarten Durchleiteteilnehmer gesendet. Die Sendung erfolgt frühestens zu Beginn des Kommunikationszyklus und spätestens zu einem Zeitpunkt T vor dem Weiterleitungszeitpunkt des Durchleiteteilnehmers. Wenn das Kommunikationssystem einen Kommunikationszyklus hat, der in einen Echtzeit-(RT)-Teilzyklus und in einen Nicht-Echtzeit-(NRT)-Teilzyklus unterteilbar ist, so erfolgt die Sendung des Datentelegramms frühestens zu Beginn des RT-Teilzyklus.

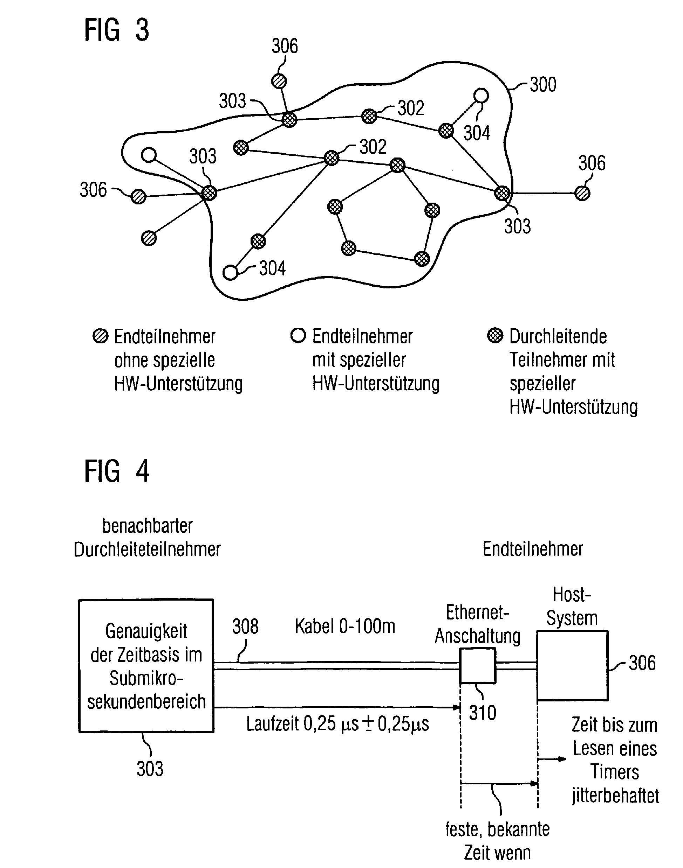

Die Figur 3 zeigt eine Prinzipdarstellung einer Ausführungsform eines erfindungsgemäßen Systems. Dieses beinhaltet ein Kommunikationssystem 300, welches für die isochrone, zyklische Echtzeit-Kommunikation geeignet ist. Zu dem Kommunikationssystem 300 gehören Durchleiteteilnehmer 302 und 303 sowie Endteilnehmer 304. Sowohl die Durchleiteteilnehmer 302 und 303 als auch die Endteilnehmer 304 haben eine spezielle Hardwareunterstützung zur Erreichung einer hohen Zeitgenauigkeit der Synchronität der Zeitbasen sowie zur Erreichung eines hohen Datendurchsatzes und einer hohen Telegrammzahl.

Über die Durchleiteteilnehmer 303 sind ferner Endteilnehmer 306 an das Kommunikationssystem 300 angeschlossen, die eine solche spezielle Hardwareunterstützung nicht aufweisen. Diese Endteilnehmer 306 werden zum Beispiel gemäß der Ausführungsform der Figur 1 mit der Zeitbasis des Kommunikationssystems 300 näherungsweise synchronisiert und senden Datentelegramme gemäß der Ausführungsform der Figur 2 in das Kommunikationssystem 300 hinein.

Die Figur 4 zeigt eine mögliche Vorgehensweise zur Ermittlung der Toleranz T (vergleiche Figur 1).

In dem gezeigten Ausführungsbeispiel ist einer der Durchleiteteilnehmer 303 mit einem der Endteilnehmer 306 über ein Kabel 308 verbunden. Durch das Kabel 308 wird eine Übertragungsstrecke zwischen dem Durchleiteteilnehmer 303 und einer Ethernet-Anschaltung 310 des Endteilnehmers 306 geschaffen. Dieses Kabel 308 hat beispielsweise eine Länge von höchstens 100 Metern, woraus sich eine Laufzeit T1 von 0,25 ms ± 0,25 ms ergibt.

Bei leerem Empfangspuffer der Ethernet-Anschaltung 310 ist die Zeit bis zur Auslösung eines Interrupts in dem Endteilnehmer 306 determiniert und konstant. Hinzu kommt unter Umständen ein Jitter der Interrupt-Latenzzeit, woraus sich insgesamt die Latenzzeit T2 nach dem Empfang des Datentelegramms in der Ethernet-Anschaltung 310 ergibt. Nachfolgend wird die Zeitbasis des Endteilnehmers 306 mit der Toleranz T nachgeregelt.

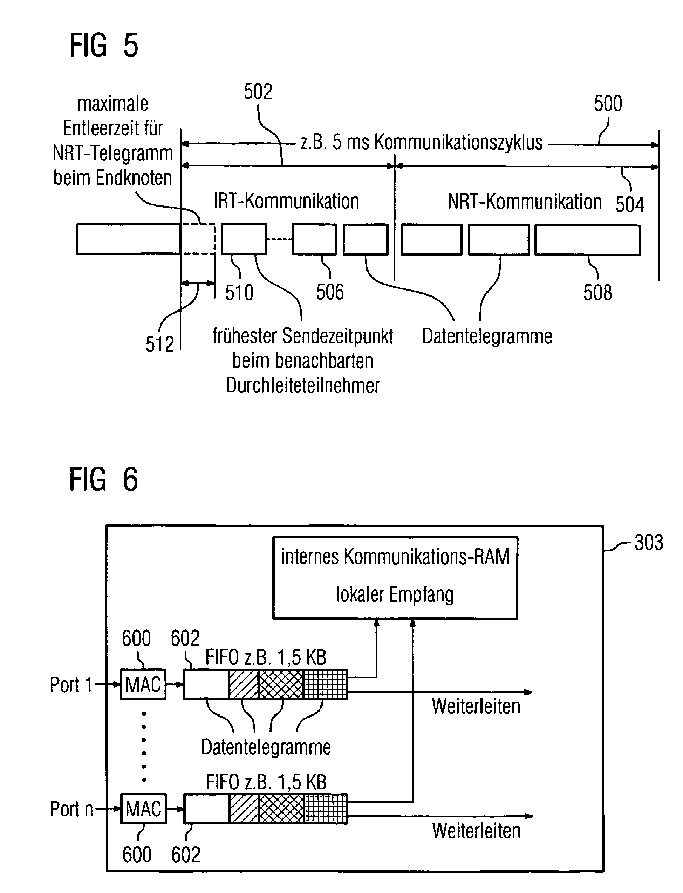

Die Figur 5 zeigt einen Kommunikationszyklus 500 eines Durchleite-Teilnehmers des Kommunikationssystems 300 (vergleiche Figur 3) von z. B. 5 ms. Der Kommunikationszyklus 500 ist in einen Teilzyklus 502 für die Echtzeit-Kommunikation und in einen Teilzyklus 504 für die Nicht-Echtzeit-Kommunikation unterteilt. Sowohl während des Teilzyklus 502 als auch während des Teilzyklus 504 werden von z. B. dem Durchleiteteilnehmer 303 Echtzeit-Datentelegramme 506 bzw. Nicht-Echtzeit-Datentelegramme 508 gesendet.

Bei dem Datentelegramm 510 in dem Teilzyklus 502 handelt es sich bei den hier betrachteten Ausführungsbeispielen um ein Synchronisationsdatentelegramm. Dieses wird von dem Durchleiteteilnehmer 303 an dessen benachbarten Endteilnehmer 306 gesendet (vergleiche Figur 3). In dem hier betrachteten Ausführungsbeispiel hat der Endteilnehmer einen Empfangspuffer in seiner Ethernet-Anschaltung 310 (vergleiche Figur 4). Der Endteilnehmer 306 benötigt zum vollständigen Entleeren des Empfangspuffers eine maximale Entleerzeit.

Damit die Synchronisation der Zeitbasis in dem Endteilnehmer 306 mit der Toleranz T erfolgen kann, sendet der Durchleiteteilnehmer das Datentelegramm 510 erst nach einer Sendepause 512 nach Beginn des Teilzyklus 502, wobei die Sendepause in etwa gleich der maximalen Entleerzeit ist. Die Sendepause 512 kann auch etwas kürzer als die maximale Entleerzeit gewählt werden, da ja auch die Laufzeit T1 von dem Endteilnehmer 306 noch für das Entleeren des Empfangspuffers verwendet werden kann.

Für die Zeitsynchronisation der Zeitbasis eines solchen Endteilnehmers wird also vorzugsweise die Eigenschaft von üblichen Ethernet-Anschaltungen ausgenutzt, dass die Laufzeit vom Eintreffen eines Telegramms bis zum Auslösen eines Interrupts konstant und ermittelbar ist, wenn das Telegramm auf eine Anschaltung trifft, in deren Empfangspuffer keine Telegramme gespeichert sind. Die an den Endteilnehmer zu sendenden Real-time (RT)-Telegramme werden deswegen so geplant, dass das erste zu empfangende Telegramm beim Endteilnehmer garantiert auf eine leere Anschaltung trifft.

Die damit erreichbare Synchronität eines Teilnehmers mit gewöhnlicher Ethernet-Anschaltung wird damit fast ausschließlich durch den Jitter der Interrupt-Latenzzeit bestimmt. Bei dedizierten Systemen kann damit eine Genauigkeit für die Zeitsynchronität im einstelligen Mikrosekundenbereich erreicht werden. Zur Erzielung einer größeren Zeittoleranz für eintreffende Echtzeit-Datentelegramme erhält vorzugsweise jeder Port eines weiterleitenden Teilnehmers einen Empfangspuffer, der
- ein Telegramm in seiner ganzen Länge "beliebig" lang speichern kann,
- mehrere Telegramme gleichzeitig bis zu einer Gesamtgröße, die der des Empfangspuffers entspricht, speichern kann und
- als FIFO (First-In First-out) so organisiert ist, dass einerseits die Telegramme immer entsprechend ihrer Eintreffreihenfolge abgeholt werden können, aber auch ein eintreffendes Telegramm unmittelbar mit dem Beginn des Eintreffens abgeholt, d. h. weitergeleitet werden kann.

Eine entsprechende Ausführungsform des Durchleiteteilnehmers 303 (vergleiche Figur 3 und Figur 4) zeigt das Blockdiagramm der Figur 6. Der Durchleiteteilnehmer hat verschiedene Ports 1... n. Diese sind jeweils mit einem Empfangsmodul 600 verbunden.

Die Empfangsmodule 600 sind ihrerseits jeweils mit einem FIFO Empfangspuffer 602 einer Größe von z. B. 2 KByte verbunden.

In dem Empfangspuffer 602 sind verschiedene Datentelegramme gespeichert, die für den lokalen Empfang an ein internes Kommunikations-RAM 604 weitergeleitet werden können und/oder die zu einem anderen Teilnehmer des Kommunikationssystems (vergleiche Kommunikationssystem 300 der Figur 3) weitergeleitet werden können.

Das Vorhandensein der Empfangspuffer 602 ermöglicht es also dem Durchleiteteilnehmer 303 Datentelegramme von den Endteilnehmern 306 auch schon deutlich vor dem projektierten Weiterleitungszeitpunkt bzw. Empfangszeitpunkt zu empfangen.

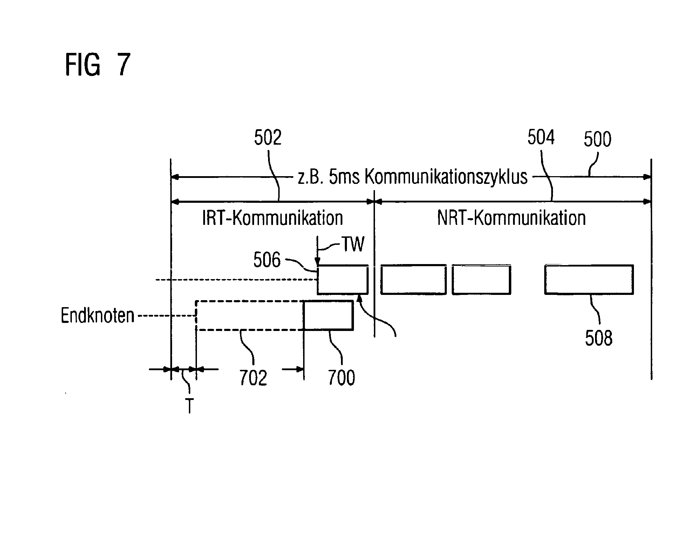

Die Figur 7 zeigt ein Timing-Diagramm zur Veranschaulichung der Zeitverhältnisse beim Empfang eines Datentelegramms von einem Endteilnehmer (vergleiche Endteilnehmer 306 der Figur 3 und Figur 4).

Der Empfang eines Datentelegramms 700 von dem Endteilnehmer durch den Durchleiteteilnehmer 303 kann frühestens um die Toleranzzeit T nach dem Beginn des Teilzyklus 502 für die Echtzeitkommunikation erfolgen. Daran anschließend gibt es ein Zeitfenster 702 innerhalb dessen das Datentelegramm 700 von dem Durchleiteteilnehmer empfangen werden kann.

Die Länge des Zeitfensters 702 ist dadurch begrenzt, dass zu dem projektierten Weiterleitungszeitpunkt TW des Datentelegramms 506 zumindest ein erster Teil des Datentelegramms 700 empfangen worden sein muss, damit dieses mittels eines so genannten cut-through-Verfahrens als Datentelegramm 506 weitergeleitet werden kann. Damit dies gewährleistet ist, muss also der Endteilnehmer 306 das Datentelegramm 307 mindestens um die Toleranzzeit T vor dem projektierten Weiterleitungszeitpunkt TW absenden.

## Patentansprüche

1. Verfahren zum Betrieb eines Endteilnehmers (306) eines isochronen, zyklischen Kommunikationssystems (300), wobei ein Synchronisationsdatentelegramm (510) von einem Durchleiteteilnehmer (303) des Kommunikationssystems (300) durch den Endteilnehmer (306) empfangen wird, wobei das Synchronisationsdatentelegramm mit der Laufzeit einer Übertragungsstrecke zwischen dem Durchleiteteilnehmer und dem Endteilnehmer behaftet ist, wobei sich die Laufzeit aus der Laufzeit des Synchronisationsdatentelegramms über die Übertragungsstrecke (308) und der Latenzzeit zur Auslösung eines Interrupts in einer Anschaltung (310) des Endteilnehmers (306) ergibt, und
wobei eine Zeitbasis des Endteilnehmers (306) mit Hilfe des Synchronisationsdatentelegramms synchronisiert wird, woraus eine Synchronisation der Zeitbasis mit einer Toleranz entsprechend der Laufzeit resultiert, und wobei eine Sendeliste von dem Endteilnehmer (306) innerhalb eines Kommunikationszyklus (500, 502) entsprechend der Zeitbasis des Endteilnehmers zyklisch abgearbeitet wird, **dadurch gekennzeichnet,**
**dass** die Sendung eines Datentelegramms (700) gemäß der Sendeliste von dem Endteilnehmer an den Durchleiteteilnehmer frühestens zu Beginn des Kommunikationszyklus (500, 502) und spätestens um die Toleranz vor einem projektierten Weiterleitungszeitpunkt des betreffenden Datentelegramms durch den Durchleiteteilnehmer (303) erfolgt, und wobei der Empfang des Synchronisationsdatentelegramms (510) von dem Endteilnehmer bei leerem Empfangspuffer des Endteilnehmers erfolgt.

2. Verfahren nach Anspruch 1, wobei der Kommunikationszyklus in einen ersten Teilzyklus (502) für die Echtzeitkommunikation und in einem zweiten Teilzyklus (504) für die Nicht-Echtzeit-Kommunikation aufteilbar ist und wobei die Übertragung des Datentelegramms in dem Teilzyklus für die Echtzeitkommunikation erfolgt.

3. Verfahren nach einem der Ansprüche 1 oder 2, wobei die Sendung des Synchronisationsdatentelegramms durch den Durchleiteteilnehmer (303) frühestens nach einer maximalen Entleerzeit des Empfangspuffers des Endteilnehmers (306) nach dem Beginn des Kommunikationszyklus erfolgt.

4. Computerprogrammprodukt, insbesondere digitales Speichermedium, zum Betrieb eines Endteilnehmers eines isochronen, zyklischen Kommunikationssystems, mit Programmmitteln zur Durchführung der folgenden Schritte:
- Empfang eines Synchronisationsdatentelegramms (510) von einem Durchleiteteilnehmer (303) des Kommunikationssystems (300) durch den Endteilnehmer (306), wobei das Synchronisationsdatentelegramm mit der Laufzeit einer Übertragungsstrecke zwischen dem Durchleiteteilnehmer und dem Endteilnehmer behaftet ist, wobei sich die Laufzeit aus der Laufzeit des Synchronisationsdatentelegramms über die Übertragungsstrecke (308) und der Latenzzeit zur Auslösung eines Interrupts in einer Anschaltung (310) des Endteilnehmers (306) ergibt,
- Synchronisation einer Zeitbasis des Endteilnehmers (306) mit Hilfe des Synchronisationsdatentelegramms, woraus eine Synchronisation der Zeitbasis mit einer Toleranz entsprechend der Laufzeit resultiert,
- zyklische Abarbeitung einer Sendeliste von dem Endteilnehmer (306) innerhalb eines Kommunikationszyklus (500, 502) entsprechend der Zeitbasis des Endteilnehmers,
**dadurch gekennzeichnet,**
**dass** die Sendung eines Datentelegramms (700) gemäß der Sendeliste von dem Endteilnehmer an den Durchleiteteilnehmer frühestens zu Beginn des Kommunikationszyklus (500, 502) und spätestens um die Toleranz vor dem projektierten Weiterleitungszeitpunkt des betreffenden Datentelegramms durch den Durchleiteteilnehmer (303) erfolgt, und wobei der Empfang des Synchronisationsdatentelegramms (510) von dem Endteilnehmer bei leerem Empfangspuffer des Endteilnehmers erfolgt.

5. Computerprogrammprodukt nach Anspruch 4, wobei die Programmmittel so ausgebildet sind, dass der Empfang des Synchronisationsdatentelegramms nur bei leerem Empfangspuffer erfolgt.

6. Endteilnehmer eines isochronen, zyklischen Kommunikationssystems mit:
- Mitteln zum Empfang eines Synchronisationsdatentelegramms (510) von einem Durchleiteteilnehmer (303) des Kommunikationssystems (300) durch den Endteilnehmer (306), wobei das Synchronisationsdatentelegramm mit der Laufzeit einer Übertragungsstrecke zwischen dem Durchleiteteilnehmer und dem Endteilnehmer behaftet ist, wobei sich die Laufzeit aus der Laufzeit des Synchronisationsdatentelegramms über die Übertragungsstrecke (308) und der Latenzzeit zur Auslösung eines Interrupts in einer Anschaltung (310) des Endteilnehmers (306) ergibt,
- Mitteln zur Synchronisation einer Zeitbasis des Endteilnehmers (306) mit Hilfe des Synchronisationsdatentelegramms, woraus eine Synchronisation der Zeitbasis mit einer Toleranz entsprechend der Laufzeit resultiert,
- Mitteln zur zyklische Abarbeitung einer Sendeliste von dem Endteilnehmer (306) innerhalb eines Kommunikationszyklus (500, 502) entsprechend der Zeitbasis des Endteilnehmers,
**dadurch gekennzeichnet,**
**dass** die Sendung eines Datentelegramms (700) gemäß der Sendeliste von dem Endteilnehmer an den Durchleiteteilnehmer frühestens zu Beginn des Kommunikationszyklus (500, 502) und spätestens um die Toleranz vor dem projektierten Weiterleitungszeitpunkt des betreffenden Datentelegramms durch den Durchleiteteilnehmer (303) erfolgt, und wobei der Empfang des Synchronisationsdatentelegramms (510) von dem Endteilnehmer bei leerem Empfangspuffer des Endteilnehmers erfolgt.

7. Durchleiteteilnehmer eines isochronen, zyklischen Kommunikationssystems mit Mitteln zur Sendung eines Synchronisationsdatentelegramms (510) an einen Endteilnehmer (306) über eine mit einer Laufzeit behaftete Übertragungsstrecke (308), wobei sich die Laufzeit aus der Laufzeit des Synchronisationsdatentelegramms über die Übertragungsstrecke (308) und der Latenzzeit zur Auslösung eines Interrupts in einer Anschaltung (310) des Endteilnehmers (306) ergibt, wobei die Sendung des Synchronisationsdatentelegramms frühestens nach einer Sendepause (512) nach Beginn des Kommunikationszyklus (500, 502) erfolgt, wobei die Sendepause einer maximalen Entleerzeit eines Empfangspuffers (310) des Endteilnehmers entspricht, und wobei der Empfang des Synchronisationsdatentelegramms (510) von dem Endteilnehmer bei leerem Empfangspuffer des Endteilnehmers erfolgt.

8. Computerprogrammprodukt, insbesondere digitales Speichermedium, mit Programmmitteln zur Sendung eines Synchronisationsdatentelegramms (510) an einen Endteilnehmer (306) über eine mit einer Laufzeit behafteten Übertragungsstrecke (308), wobei sich die Laufzeit aus der Laufzeit des Synchronisationsdatentelegramms über die Übertragungsstrecke (308) und der Latenzzeit zur Auslösung eines Interrupts in einer Anschaltung (310) des Endteilnehmers (306) ergibt, wobei die Sendung des Datentelegramms frühestens nach einer Sendepause (512) nach Beginn des Kommunikationszyklus (500, 502) erfolgt, und die Sendepause einer maximalen Entleerzeit des Empfangspuffers (310) des Endteilnehmers (306) entspricht, und wobei der Empfang des Synchronisationsdatentelegramms (510) von dem Endteilnehmer bei leerem Empfangspuffer des Endteilnehmers erfolgt.

9. Kommunikationssystem mit zumindest einem Endteilnehmer nach Anspruch 6 und mit zumindest einem Durchleiteteilnehmer nach Anspruch 7.

## Claims

1. Method for operating an end user (306) of an isochronous, cyclical communication system (300), with a synchronising data telegram (510) from a connecting user (303) of the communication system (300) being received by the end user (306), with the synchronising data telegram being subject to the propagation time of a transmission link between the connecting user and the end user, with the propagation time resulting from the propagation time of the synchronising data telegram via the transmission link (308) and the latency for triggering an interrupt in a connection (310) of the end user (306) and
with a time base of the end user (306) being synchronised with the aid of the synchronising data telegram, from which synchronisation of the time base with a tolerance corresponding to the propagation time results, and with a transmission list being processed in a cyclical manner by the end user (306) within a communication cycle (500, 502) according to the time base of the end user,
**characterised in that**
a data telegram (700) is transmitted according to the transmission list from the end user to the connecting user at the earliest at the start of the communication cycle (500, 502) and at the latest by the tolerance before a planned forwarding time of the data telegram under consideration by the connecting user (303) and with the synchronising data telegram (510) being received by the end user when the end user's receive buffer is empty.

2. Method according to claim 1, wherein the communication cycle can be divided into a first partial cycle (502) for real-time communication and a second partial cycle (504) for non-real-time communication and wherein the data telegram is transmitted in the partial cycle for real-time communication.

3. Method according to one of claims 1 or 2, wherein the synchronising data telegram is sent by the connecting user (303) at the earliest after a maximum emptying time for the receive buffer of the end user (306) after the start of the communication cycle.

4. Computer programme product, in particular a digital storage medium, for operating an end user of an isochronous, cyclical communication system, with programme means for carrying out the following steps:
- receipt of a synchronising data telegram (510) from a connecting user (303) of the communication system (300) by the end user (306), with the synchronising data telegram being subject to the propagation time of a transmission link between the connecting user and the end user, with the propagation time resulting from the propagation time of the synchronising data telegram via the transmission link (308) and the latency for triggering an interrupt in a connection (310) of the end user (306),
- synchronisation of a time base of the end user (306) with the aid of the synchronising data telegram, resulting in synchronisation of the time base with a tolerance corresponding to the propagation time,
- cyclical processing of a transmission list by the end user (306) within a communication cycle (500, 502) corresponding to the time base of the end user,
**characterised in that**
a data telegram (700) is transmitted according to the transmission list from the end user to the connecting user at the earliest at the start of the communication cycle (500, 502) and at the latest by the tolerance before the planned forwarding time of the relevant data telegram by the connecting user (303) and with the synchronising data telegram (510) being received by the end user when the end user's receive buffer is empty.

5. Computer program product according to claim 4, wherein the programme means are configured such that the synchronising data telegram is only received when the receive buffer is empty.

6. End user of an isochronous, cyclical communication system with:
- means for receipt of a synchronising data telegram (510) from a connecting user (303) of the communication system (300) by the end user (306), with the synchronising data telegram being subject to the propagation time of a transmission link between the connecting user and the end user, with the propagation time resulting from the propagation time of the synchronising data telegram via the transmission link (308) and the latency for triggering an interrupt in a connection (310) of the end user (306),
- means for synchronisation of a time base of the end user (306) with the aid of the synchronising data telegram, resulting in synchronisation of the time base with a tolerance corresponding to the propagation time,
- means for cyclical processing of a transmission list by the end user (306) within a communication cycle (500, 502) corresponding to the time base of the end user,
**characterised in that**
a data telegram (700) is transmitted according to the transmission list from the end user to the connecting user at the earliest at the start of the communication cycle (500, 502) and at the latest by the tolerance before the planned forwarding time of the relevant data telegram by the connecting user (303) and with the synchronising data telegram (510) being received by the end user when the end user's receive buffer is empty.

7. Connecting user of an isochronous, cyclical communication system with means for sending a synchronising data telegram (510) to an end user (306) via a transmission link (308) subject to a propagation time, with the propagation time resulting from the propagation time of the synchronising data telegram via the transmission link (308) and the latency for triggering an interrupt in a connection (310) of the end user (306), with the synchronising data telegram being sent at the earliest after a transmission pause (512) after the start of the communication cycle (500, 502), with the transmission pause corresponding to a maximum emptying time for a receive buffer (310) of the end user and with the synchronising data telegram (510) being received by the end user when the end user's receive buffer is empty.

8. Computer programme product, in particular a digital storage medium, with programme means for sending a synchronising data telegram (510) to an end user (306) via a transmission link (308) subject to a propagation time, with the propagation time resulting from the propagation time of the synchronising data telegram via the transmission link (308) and the latency for triggering an interrupt in a connection (310) of the end user (306), with the synchronising data telegram being sent at the earliest after a transmission pause (512) after the start of the communication cycle (500, 502) and the transmission pause corresponding to a maximum emptying time for the receive buffer (310) of the end user and with the synchronising data telegram (510) being received by the end user when the end user's receive buffer is empty.

9. Communication system with at least one end user according to claim 6 and with at least one connecting user according to claim 7.

## Revendications

1. Procédé de fonctionnement d'un utilisateur terminal (306) d'un système de communication isochrone et cyclique (300),
un télégramme de données de synchronisation (510) d'un utilisateur intermédiaire (303) du système de communication (300) étant reçu par l'utilisateur terminal (306), le télégramme de données de synchronisation étant retardé du temps de propagation d'une voie de transmission entre l'utilisateur intermédiaire et l'utilisateur terminal, le temps de propagation se composant du temps de propagation du télégramme de données de synchronisation sur la voie de transmission (308) et du temps de latence pour le déclenchement d'une interruption dans une connexion (310) de l'utilisateur terminal (306), et
une base de temps de l'utilisateur terminal (306) étant synchronisée à l'aide du télégramme de données de synchronisation, ce qui donne une synchronisation de la base de temps avec une tolérance en fonction du temps de propagation, et une liste d'émission de l'utilisateur terminal (306) étant traitée cycliquement à l'intérieur d'un cycle de communication (500, 502) en fonction de la base de temps de l'utilisateur terminal,
**caractérisé par le fait que** l'émission d'un télégramme de données (700) selon la liste d'émission par l'utilisateur terminal vers l'utilisateur intermédiaire s'effectue au plus tôt au début du cycle de communication (500, 502) et au plus tard un certain temps égal à la tolérance avant un instant de retransmission projeté du télégramme de données concerné par l'utilisateur intermédiaire (303), la réception du télégramme de données de synchronisation (510) par l'utilisateur terminal s'effectuant lorsque le tampon d'entrée de l'utilisateur terminal est vide.

2. Procédé selon la revendication 1, le cycle de communication pouvant être divisé en un premier cycle partiel (502) pour la communication en temps réel et un deuxième cycle partiel (504) pour la communication non en temps réel et la transmission du télégramme de données s'effectuant dans le cycle partiel pour la communication en temps réel.

3. Procédé selon l'une des revendications 1 ou 2, l'émission du télégramme de données de synchronisation par l'utilisateur intermédiaire (303) s'effectuant au plus tôt après un temps maximal de vidage du tampon d'entrée de l'utilisateur terminal (306) après le début du cycle de communication.

4. Produit constituant programme informatique, notamment support de mémorisation numérique, pour le fonctionnement d'un utilisateur terminal d'un système de communication isochrone et cyclique, avec des moyens formant programme pour l'exécution des étapes suivantes :
- réception d'un télégramme de données de synchronisation (510) d'un utilisateur intermédiaire (303) du système de communication (300) par l'utilisateur terminal (306), le télégramme de données de synchronisation étant retardé du temps de propagation d'une voie de transmission entre l'utilisateur intermédiaire et l'utilisateur terminal, le temps de propagation se composant du temps de propagation du télégramme de données de synchronisation sur la voie de transmission (308) et du temps de latence pour le déclenchement d'une interruption dans une connexion (310) de l'utilisateur terminal (306),
- synchronisation d'une base de temps de l'utilisateur terminal (306) à l'aide du télégramme de données de synchronisation, ce qui donne une synchronisation de la base de temps avec une tolérance en fonction du temps de propagation,
- traitement cyclique d'une liste d'émission par l'utilisateur terminal (306) à l'intérieur d'un cycle de communication (500, 502) en fonction de la base de temps de l'utilisateur terminal,
**caractérisé par le fait que** l'émission d'un télégramme de données (700) selon la liste d'émission par l'utilisateur terminal vers l'utilisateur intermédiaire s'effectue au plus tôt au début du cycle de communication (500, 502) et au plus tard un certain temps égal à la tolérance avant un instant de retransmission projeté du télégramme de données concerné par l'utilisateur intermédiaire (303), la réception du télégramme de données de synchronisation (510) par l'utilisateur terminal s'effectuant lorsque le tampon d'entrée de l'utilisateur terminal est vide.

5. Produit constituant programme informatique selon la revendication 4, les moyens formant programme étant conçus de telle sorte que la réception du télégramme de données de synchronisation s'effectue seulement lorsque le tampon d'entrée est vide.

6. Utilisateur terminal d'un système de communication isochrone et cyclique, avec :
- des moyens pour la réception d'un télégramme de données de synchronisation (510) d'un utilisateur intermédiaire (303) du système de communication (300) par l'utilisateur terminal (306), le télégramme de données de synchronisation étant retardé du temps de propagation d'une voie de transmission entre l'utilisateur intermédiaire et l'utilisateur terminal, le temps de propagation se composant du temps de propagation du télégramme de données de synchronisation sur la voie de transmission (308) et du temps de latence pour le déclenchement d'une interruption dans une connexion (310) de l'utilisateur terminal (306),
- des moyens pour la synchronisation d'une base de temps de l'utilisateur terminal (306) à l'aide du télégramme de données de synchronisation, ce qui donne une synchronisation de la base de temps avec une tolérance en fonction du temps de propagation, et
- des moyens pour le traitement cyclique d'une liste d'émission par l'utilisateur terminal (306) à l'intérieur d'un cycle de communication (500, 502) en fonction de la base de temps de l'utilisateur terminal,
**caractérisé par le fait que** l'émission d'un télégramme de données (700) selon la liste d'émission par l'utilisateur terminal vers l'utilisateur intermédiaire s'effectue au plus tôt au début du cycle de communication (500, 502) et au plus tard un certain temps égal à la tolérance avant un instant de retransmission projeté du télégramme de données concerné par l'utilisateur intermédiaire (303), la réception du télégramme de données de synchronisation (510) par l'utilisateur terminal s'effectuant lorsque le tampon d'entrée de l'utilisateur terminal est vide.

7. Utilisateur intermédiaire d'un système de communication isochrone et cyclique, avec des moyens pour l'émission d'un télégramme de données de synchronisation (510) à un utilisateur terminal (306) sur une voie de transmission (308) retardée d'un temps de propagation, le temps de propagation se composant du temps de propagation du télégramme de données de synchronisation sur la voie de transmission (308) et du temps de latence pour le déclenchement d'une interruption dans une connexion (310) de l'utilisateur terminal (306), l'émission du télégramme de données de synchronisation s'effectuant au plus tôt après une pause d'émission (512) après le début du cycle de communication (500, 502), la pause d'émission correspondant à un temps maximal de vidage d'un tampon d'entrée (310) de l'utilisateur terminal et la réception du télégramme de données de synchronisation (510) par l'utilisateur terminal s'effectuant lorsque le tampon d'entrée de l'utilisateur terminal est vide.

8. Produit constituant programme informatique, notamment support de mémorisation numérique, avec des moyens formant programme pour l'émission d'un télégramme de données de synchronisation (510) à un utilisateur terminal (306) sur une voie de transmission (308) retardée d'un temps de propagation, le temps de propagation se composant du temps de propagation du télégramme de données de synchronisation sur la voie de transmission (308) et du temps de latence pour le déclenchement d'une interruption dans une connexion (310) de l'utilisateur terminal (306), l'émission du télégramme de données s'effectuant au plus tôt après une pause d'émission (512) après le début du cycle de communication (500, 502), la pause d'émission correspondant à un temps maximal de vidage d'un tampon d'entrée (310) de l'utilisateur terminal (306) et la réception du télégramme de données de synchronisation (510) par l'utilisateur terminal s'effectuant lorsque le tampon d'entrée de l'utilisateur terminal est vide.

9. Système de communication comportant au moins un utilisateur terminal selon la revendication 6 et au moins un utilisateur intermédiaire selon la revendication 7.
